# FASCICULE DE BREVET EUROPEEN

(11) **EP 3 221 773 B1**
(45) Date de publication et mention de la délivrance du brevet: **21.02.2024**
(21) Numéro de dépôt: 15817444.1
(22) Date de dépôt: 20.11.2015
(51) Int. Cl.: G06F 3/01, B60K 37/06, B60K 35/00, H01H 13/85

(54) **DISPOSITIF DE RETOUR HAPTIQUE POUR VÉHICULE AUTOMOBILE**
HAPTISCHE RÜCKKOPPLUNGSVORRICHTUNG FÜR EIN KRAFTFAHRZEUG
HAPTIC FEEDBACK DEVICE FOR A MOTOR VEHICLE

(30) Priorité: 21.11.2014 FR 1402637
(43) Date de publication de la demande: 27.09.2017
(73) Titulaire: DAV, 94046 Créteil Cedex (FR)
(72) Inventeur: AUBRY, Anthony, 94046 Créteil CEDEX (FR); EL-OUARDI, Nour-Eddine, 94046 Créteil CEDEX (FR)
(74) Mandataire: Delplanque, Arnaud
(86) Numéro de dépôt international: PCT/FR2015/053165
(87) Numéro de publication internationale: WO 2016/079458

(56) Documents cités:
- EP-A1- 2 876 527
- WO-A1-2012/052635
- US-A1- 2011 227 849
- US-A1- 2014 028 573

## Description

La présente invention concerne un dispositif de retour haptique pour véhicule automobile générant un retour haptique à l'utilisateur en réponse à un contact sur une surface tactile.

Dans le domaine automobile, les interfaces de commande multifonctions à surface tactile sont de plus en plus utilisées pour commander des systèmes électriques ou électroniques, tels qu'un système de climatisation, un système audio ou encore un système de navigation. De telles interfaces peuvent être associées à un écran d'affichage et permettre une navigation dans des menus déroulants comportant différentes commandes relatives aux systèmes à commander.

Afin de compenser la perte d'informations par retour mécanique confirmant à l'utilisateur un contact sur la surface tactile, on prévoit la génération d'un retour haptique comme rétroaction à l'utilisateur. Le retour haptique est généralement obtenu par l'action d'un actionneur vibratoire fixé à la surface tactile, piloté pour faire vibrer la surface tactile en réponse à un contact de la surface.

Un retour haptique bien perçu par l'utilisateur présente une amplitude d'accélération importante s'amortissant rapidement après la première impulsion. On parle d'effet haptique « franc ». Cependant, de tels effets haptiques peuvent être difficiles à générer pour des réalisations dites « suspendues », dans lesquelles la partie mobile comportant l'actionneur et la surface tactile, est reliée à une partie fixe par un amortisseur. On constate en effet que l'oscillation de la vibration générée perdure relativement longtemps, amoindrissant la qualité de perception.

Le document WO 2012/052635 A1 décrit un module d'interface tactile pour véhicule automobile, permettant notamment de transmettre un retour haptique à un utilisateur, comprenant un actionneur électromagnétique comportant un premier et un deuxième moyens élastiques précontraints, de part et d'autre d'un noyau mobile; ces moyens élastiques peuvent avoir une raideur différente, afin que le mouvement du noyau mobile soit fortement asymétrique par rapport à la position de repos.

Le document US 2014/028573 A1 décrit un dispositif de retour haptique comprenant un organe de suspension présentant des raideurs différentes dans des directions différentes pour permettre à un écran tactile de se déplacer dans la direction d'un effet tactile souhaité et au même temps d'être très rigide dans les autres directions.

Le document US 2011/0227849 A1 décrit un dispositif de retour haptique comprenant une organe d'amortissement asymétrique présentant des propriétés d'amortissement différentes dans des directions différentes, comme par exemples des raideurs différentes dans des directions différentes.

Un but de la présente invention est de proposer un dispositif de retour haptique pour lequel l'oscillation de la vibration générée s'amortit plus rapidement.

A cet effet, la présente invention a pour objet un dispositif de retour haptique pour véhicule automobile selon la revendication 1.

Dans un exemple de réalisation non limitatif de l'invention, un dispositif de retour haptique pour véhicule automobile comporte:
- une partie mobile comprenant une surface tactile et au moins actionneur vibratoire pour faire vibrer la surface tactile,
- une partie fixe destinée à être fixée au véhicule automobile,
caractérisé en ce qu'il comporte au moins un organe d'amortissement asymétrique au moins partiellement interposé entre la partie mobile et la partie fixe, l'organe d'amortissement asymétrique étant configuré pour amortir la vibration générée par l'actionneur vibratoire de manière plus importante dans un sens que dans le sens opposé.

Un amorti asymétrique permet d'amortir plus rapidement les oscillations, ce qui permet d'obtenir un effet haptique franc mieux perçu par l'utilisateur.

Selon une ou plusieurs caractéristiques du dispositif de retour haptique, prise seule ou en combinaison,
- l'organe d'amortissement asymétrique comporte une première portion configurée pour amortir la vibration générée par l'actionneur vibratoire dans un sens et une deuxième portion configurée pour amortir la vibration au moins dans le sens opposé,
- le dispositif de retour haptique comporte au moins un organe de fixation pour fixer la partie mobile à la partie fixe à travers l'organe d'amortissement asymétrique, l'organe d'amortissement asymétrique comportant une première portion interposée entre la partie mobile et la partie fixe et une deuxième portion interposée entre la partie fixe et la tête de l'organe de fixation,
- la première portion de l'organe d'amortissement asymétrique est plus raide que la deuxième portion de l'organe d'amortissement asymétrique. L'organe d'amortissement asymétrique amortit ainsi plus le déplacement de la partie mobile vers la partie fixe que vers le doigt de l'utilisateur. L'amplitude de vibration de la surface tactile vers le doigt de l'utilisateur est ainsi plus importante qu'à l'écart du doigt, ce qui accentue le ressenti de l'utilisateur avec la même énergie fournie. En effet, on constate que l'utilisateur présente une meilleure sensibilité à une poussée qu'à un enfoncement du doigt. Par ailleurs, en amortissant plus les amplitudes de vibration en enfoncement, on limite la perte d'énergie fournie pour générer l'oscillation vers la partie fixe. L'utilisation de l'énergie fournie pour déplacer la partie mobile est ainsi optimisée,
- la première portion de l'organe d'amortissement asymétrique comporte une forme géométrique conférant une raideur plus importante que celle de la forme géométrique de la deuxième portion de l'organe d'amortissement asymétrique,
- la première portion de l'organe d'amortissement asymétrique présente une épaisseur plus grande dans la direction de la vibration que l'épaisseur de la deuxième portion de l'organe d'amortissement asymétrique,
- la première portion de l'organe d'amortissement asymétrique comporte un matériau présentant une raideur plus importante que la raideur du matériau de la deuxième portion de l'organe d'amortissement asymétrique,
- la première et/ou la deuxième portion de l'organe d'amortissement asymétrique présente la forme d'une rondelle,
- l'organe d'amortissement asymétrique comporte une portion centrale reliant la première et la deuxième portion,
- l'organe d'amortissement asymétrique est interposé entre la partie mobile et la partie fixe et, est fixé à la partie mobile et à la partie fixe, l'organe d'amortissement asymétrique présentant des propriétés d'amortissement différentes en compression d'en traction. Cela permet d'éviter de prévoir d'une part, une deuxième portion l'organe d'amortissement asymétrique et d'autre part, un organe de fixation.
- l'organe d'amortissement asymétrique amortit de manière plus importante en compression qu'en traction. On accentue ainsi le ressenti de l'utilisateur avec la même énergie fournie et on limite la perte d'énergie fournie pour générer l'oscillation vers la partie fixe.
- l'organe d'amortissement asymétrique est réalisé en une seule pièce,
- l'actionneur vibratoire est configuré pour faire vibrer la surface tactile dans une direction de vibration perpendiculaire au plan de la surface tactile.

### DESCRIPTION SOMMAIRE DES DESSINS

D'autres avantages et caractéristiques apparaîtront à la lecture de la description de l'invention, ainsi que sur les figures annexées qui représentent un exemple de réalisation non limitatif de l'invention et sur lesquelles :
- la figure 1 représente un premier exemple de réalisation d'un dispositif de retour haptique pour véhicule automobile,
- la figure 2 représente une vue agrandie d'un détail de la figure 1,
- la figure 3 représente une vue en coupe d'éléments d'un dispositif de retour haptique selon le premier exemple de réalisation,
- la figure 4 représente une vue en perspective de l'organe d'amortissement asymétrique de la figure 3,
- la figure 5 montre un graphique de l'amplitude de la vibration dans la direction de vibration en fonction du temps pour un dispositif de retour haptique selon le premier exemple de réalisation (courbe en traits pleins) et pour un système de l'état de la technique (courbe en pointillés), et
- la figure 6 montre un deuxième exemple de réalisation d'un dispositif à retour haptique.

Sur ces figures, les éléments identiques portent les mêmes numéros de référence.

### DESCRIPTION DÉTAILLÉE

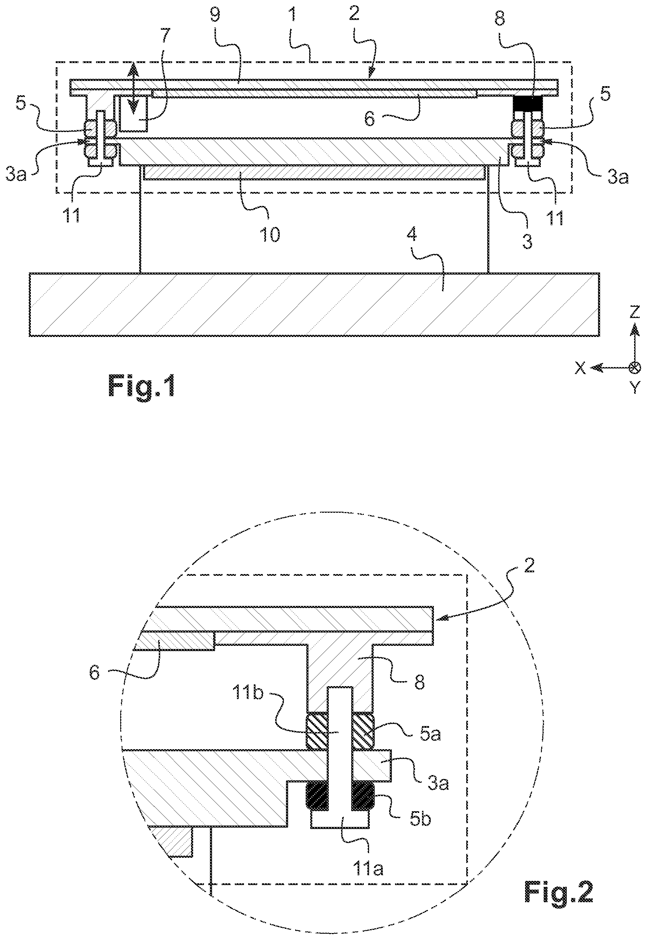

Les figures 1 et 2 représentent un premier exemple de réalisation d'un dispositif de retour haptique pour véhicule automobile 1, par exemple agencé dans un tableau de commande du véhicule.

Le dispositif de retour haptique 1 comporte une partie mobile 2, une partie fixe 3 destinée à être fixée au véhicule automobile 4 et au moins un organe d'amortissement asymétrique 5 au moins partiellement interposé entre la partie mobile 2 et la partie fixe 3, pour relier la partie mobile 2 à la partie fixe 3.

Plus précisément, le dispositif de retour haptique 1 comporte par exemple deux organes d'amortissement asymétrique 5, agencés sous des bords opposés de la partie mobile 2.

La partie mobile 2 comporte une surface tactile 6, au moins un actionneur vibratoire 7 pour faire vibrer la surface tactile 6, par exemple dans une direction de vibration Z perpendiculaire au plan X, Y de la surface tactile 6 et un support 8, portant la surface tactile 6 et auquel est fixé l'actionneur vibratoire 7, la partie mobile 2 comprenant l'actionneur vibratoire 7, définissant une architecture dite de type « suspendu ».

La surface tactile 6 est par exemple une surface plane. Elle comporte un capteur, tel que résistif ou capacitif, pour détecter un contact d'un utilisateur sur la surface et déterminer la position du contact. La surface tactile 6 permet notamment à un utilisateur de sélectionner, d'activer ou de valider une fonction, telle qu'une fonction du système de climatisation, de navigation, de l'autoradio ou le défilement et la sélection d'un choix parmi une liste, telle qu'une liste téléphonique. La surface tactile 6 est par exemple associée à un écran d'affichage pour former un écran tactile et permettre une navigation dans des menus déroulants comportant différentes commandes relatives aux systèmes à commander.

La vibration de la surface tactile 6 permet de fournir un retour haptique à l'utilisateur en réponse à un contact, tel qu'un appui ou une rotation ou un déplacement linéaire... par son doigt ou tout autre moyen d'activation (par exemple un stylet). Le retour est dit « haptique », car il est perceptible par le toucher de la surface tactile 6.

Le support 8 et la surface tactile 6 sont par exemple recouverts d'un film décoratif ou d'une plaque de verre 9 pouvant porter des motifs de décoration.

L'actionneur vibratoire 7 est par exemple de type ERM (pour « Eccentric Rotating-Mass » en anglais) également appelé « moteur vibrant » ou moteur à masselotte. Selon un autre exemple, l'actionneur vibratoire 7 est de type électromagnétique. Il repose par exemple sur une technologie similaire à celle du Haut-Parleur (en anglais : « Voice-Coil »). L'actionneur vibratoire 7 est par exemple un LRA (pour « Linear Resonant Actuator » en anglais), également appelé « moteur linéaire ». La partie mobile est par exemple formée par un aimant mobile coulissant à l'intérieur d'une bobine fixe ou par une bobine mobile coulissant autour d'un aimant fixe, la partie mobile et la partie fixe coopérant par effet électromagnétique. Selon un autre exemple, l'actionneur vibratoire 7 est de type piézoélectrique.

La partie fixe 3 peut porter une carte électronique 10 telle qu'une carte PCB ou « printed circuit board » en anglais) portant par exemple un dispositif de rétroéclairage, un capteur de vibration et des pistes électroniques, reliant notamment le capteur de la surface tactile 6 et l'actionneur vibratoire 7 à une unité de contrôle et d'alimentation.

L'organe d'amortissement asymétrique 5 est configuré pour amortir la vibration générée par l'actionneur vibratoire 7 de manière plus importante dans un sens que dans l'autre sens de la direction de vibration Z.

Un amorti asymétrique permet d'amortir plus rapidement les oscillations, ce qui permet d'obtenir un effet haptique franc mieux perçu par l'utilisateur.

L'organe d'amortissement asymétrique 5 comporte par exemple un ressort ou un plot en matériau souple, tel qu'en caoutchouc, également appelé « silentbloc » ou une combinaison de ces éléments.

Selon un premier exemple de réalisation mieux visible en figure 2, l'organe d'amortissement asymétrique 5 comporte une première portion 5a configurée pour amortir la vibration générée par l'actionneur vibratoire 7 dans un sens et une deuxième portion 5b configurée pour amortir la vibration au moins dans le sens opposé.

Le dispositif de retour haptique 1 comporte en outre au moins un organe de fixation 11 pour fixer la partie mobile 2 à la partie fixe 3 à travers l'organe d'amortissement asymétrique 5.

La première portion 5a est interposée entre la partie mobile 2 et la partie fixe 3 et la deuxième portion 5b est interposée entre la partie fixe 3 et la tête de l'organe de fixation 11.

L'organe de fixation est par exemple une vis, comportant une tête 11a surmontant une tige 11b, pour fixer la partie mobile 2 à la partie fixe 3 à travers l'organe d'amortissement asymétrique 5, l'extrémité de la tige de l'organe de fixation 11b s'insérant par exemple dans un montant du support 8 de la partie mobile 2.

La première portion 5a est interposée entre la partie mobile 2 et un rebord de la partie fixe 3a et la deuxième portion 5b est interposée entre la partie fixe 3 et la tête de l'organe de fixation 11a. La partie mobile 2, la première portion 5a, la partie fixe 3, la deuxième portion 5b et la tête de l'organe de fixation 11a sont alignées dans la direction de la vibration Z avec la tige de l'organe de fixation 11b. Le rebord de la partie fixe 3a est ainsi pris en sandwich entre la première et la deuxième portion de l'organe d'amortissement asymétrique 5a, 5b.

Ainsi, en fonctionnement, lorsque l'actionneur vibratoire 7 fait vibrer la surface tactile 6, la partie mobile 2 se déplace alternativement dans les deux sens selon la direction de vibration Z. Lorsque la partie mobile 2 se déplace vers le doigt de l'utilisateur (vers le haut sur la figure 1), la deuxième portion de l'organe d'amortissement asymétrique 5b est comprimée et joue le rôle d'amortisseur. Lorsque la partie mobile 2 se déplace vers le véhicule, en enfoncement (vers le bas sur la figure 1), c'est la première portion de l'organe d'amortissement asymétrique 5a qui se comprime et joue le rôle d'amortisseur. La première et la deuxième portions de l'organe d'amortissement asymétrique 5a, 5b permettent ainsi d'amortir l'oscillation dans les deux sens.

La première portion de l'organe d'amortissement asymétrique 5a est par exemple plus raide que la deuxième portion de l'organe d'amortissement asymétrique 5b. L'organe d'amortissement asymétrique 5 amortit ainsi plus le déplacement de la partie mobile 2 vers la partie fixe 3 que vers le doigt de l'utilisateur.

Pour cela, la première portion de l'organe d'amortissement asymétrique 5a comporte par exemple une forme géométrique conférant une raideur plus importante que celle de la forme géométrique de la deuxième portion de l'organe d'amortissement asymétrique 5b.

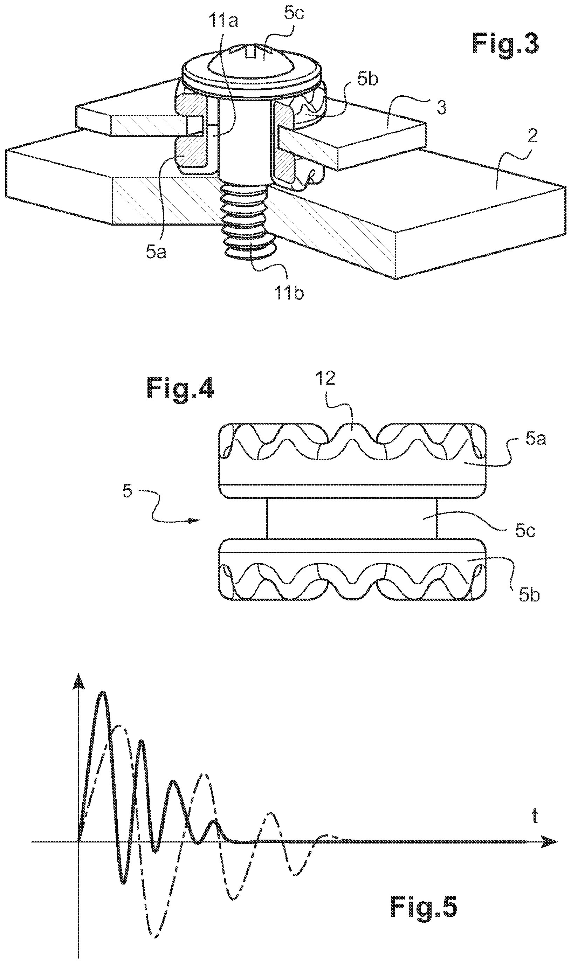

Par exemple et comme mieux représenté sur les figures 3 et 4, la première portion de l'organe d'amortissement asymétrique 5a présente une épaisseur plus grande dans la direction de la vibration Z que la deuxième portion de l'organe d'amortissement asymétrique 5b.

En outre, et comme mieux visible sur les figures 3 et 4, on peut prévoir que la première et/ou la deuxième portion de l'organe d'amortissement asymétrique 5a, 5b présente la forme d'une rondelle. Les rondelles peuvent présenter des vaguelettes 12 permettant de modifier la raideur de l'organe d'amortissement asymétrique 5 en fonction du vissage de l'organe de fixation 10.

En alternative ou en complément, la première portion de l'organe d'amortissement asymétrique 5a peut comporter un matériau présentant une raideur plus importante que la raideur du matériau de la deuxième portion de l'organe d'amortissement asymétrique 5b.

Selon un premier exemple de réalisation, les première et deuxième portions 5a, 5b sont deux éléments distincts, séparés.

On prévoit par exemple que la première portion 5a soit montée libre entre la partie mobile 2 et la partie fixe 3, la première portion 5a étant traversée par la tige de l'organe de fixation 11b. La deuxième portion 5b est fixée, par exemple par collage, entre la partie fixe 3 et la tête de l'organe de fixation 11a. Ainsi la première portion 5a travaille en compression uniquement et la deuxième portion 5b travaille en compression et en traction.

Selon un autre exemple, la première et la deuxième portion 5a, 5b sont montées libres autour de la tige de l'organe de fixation 11b. Les deux portions 5a, 5b travaillent alors alternativement en compression uniquement.

On peut aussi prévoir comme représenté sur les figures 3 et 4, que l'organe d'amortissement asymétrique 5 comporte une portion centrale 5c entre la première et la deuxième portion 5a, 5b, entourant la tige de l'organe de fixation 10b et reliant la première et la deuxième portion 5a, 5b.

L'organe d'amortissement asymétrique 5a, 5b, 5c est par exemple réalisé en une seule pièce (figure 4) et présente un trou central pour le passage de l'organe de fixation 11. On peut aussi prévoir que l'organe d'amortissement asymétrique 5 surmoule l'organe de fixation 11 (non représenté).

L'amplitude de vibration de la surface tactile 6 vers le doigt de l'utilisateur est ainsi plus importante qu'à l'écart du doigt, ce qui accentue le ressenti de l'utilisateur avec la même énergie fournie. En effet, on constate que l'utilisateur présente une meilleure sensibilité à une poussée qu'à un enfoncement du doigt. Par ailleurs, en amortissant de manière plus importante les amplitudes de vibration en enfoncement, on limite la perte d'énergie fournie pour générer l'oscillation vers la partie fixe 3. L'utilisation de l'énergie fournie pour déplacer la partie mobile 2 est ainsi optimisée.

Le graphique de la figure 5 compare l'amplitude des oscillations en fonction du temps dans la direction de vibration Z perpendiculaire au plan X, Y de la surface tactile 6 pour un dispositif de retour haptique 1 pourvu d'un organe d'amortissement asymétrique 5 (courbe en traits pleins) et pour un système de l'art antérieur pourvu d'un joint standard (courbe en pointillés).

On constate sur ce graphique que le nombre d'oscillations est réduit pour un organe d'amortissement asymétrique 5, l'amortissement de l'oscillation de la vibration est donc plus rapide. On constate également un décalage de la courbe dans la direction de vibration +Z. Le retour haptique présente ainsi un aspect franc dont l'amplitude d'accélération est importante et la durée est courte, de préférence inférieure à 150msec.

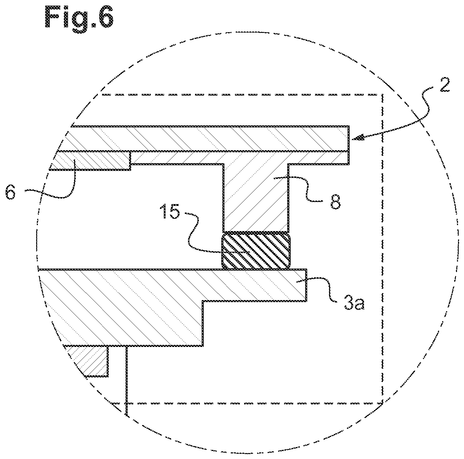

La figure 6 illustre un deuxième mode de réalisation.

Ce mode diffère du mode précédemment décrit par le fait que l'organe d'amortissement asymétrique 15 est uniquement interposé entre la partie mobile 2 et la partie fixe 3, et présente des propriétés d'amortissement différentes en compression d'en traction. L'organe d'amortissement asymétrique 15 est fixé d'une part à la partie mobile 2 et d'autre part, à la partie fixe 3, par exemple par collage. Cela permet d'éviter de prévoir une deuxième portion l'organe d'amortissement asymétrique 15 et de prévoir un organe de fixation.

On peut aussi prévoir que l'organe d'amortissement asymétrique 15 amortisse plus en compression qu'en traction. Ainsi, et comme précédemment, l'organe d'amortissement asymétrique 15 amortit plus le déplacement de la partie mobile 2 vers la partie fixe 3 que vers le doigt de l'utilisateur. L'amplitude de vibration de la surface tactile 6 vers le doigt de l'utilisateur est ainsi plus importante qu'à l'écart, ce qui accentue le ressenti de l'utilisateur avec la même énergie fournie. Par ailleurs, en amortissant plus les amplitudes de vibration en enfoncement, on limite la perte d'énergie fournie pour générer l'oscillation vers la partie fixe 3. L'utilisation de l'énergie fournie pour déplacer la partie mobile 2 est ainsi optimisée.

## Revendications

1. Dispositif de retour haptique (1) pour véhicule automobile comportant :
- une partie mobile (2) comprenant une surface tactile (6) et au moins actionneur vibratoire (7) pour faire vibrer la surface tactile (6),
- un support (8) portant la surface tactile (6) et auquel est fixé l'actionneur vibratoire (7),
- une partie fixe (3) destinée à être fixée au véhicule automobile,
- au moins un organe d'amortissement asymétrique (5 ; 15) au moins partiellement interposé entre la partie mobile (2) et la partie fixe (3), l'organe d'amortissement asymétrique (5 ; 15) étant configuré pour amortir la vibration générée par l'actionneur vibratoire (7) de manière plus importante dans un sens que dans le sens opposé, agencé en ce qu'il comporte un organe d'amortissement asymétrique (5) comportant une première portion (5a) configurée pour amortir la vibration générée par l'actionneur vibratoire (7) dans un sens et une deuxième portion (5b) configurée pour amortir la vibration au moins dans le sens opposé,
la première portion de l'organe d'amortissement asymétrique (5a) étant plus raide que la deuxième portion de l'organe d'amortissement asymétrique (5b) l'organe d'amortissement asymétrique (15) étant interposé entre la partie mobile (2) et la partie fixe (3) et, est fixé à la partie mobile (2) et à la partie fixe (3), l'organe d'amortissement asymétrique (15) présentant des propriétés d'amortissement différentes en compression d'en traction,
l'organe d'amortissement asymétrique (15) amortissant de manière plus importante en compression qu'en traction,
en ce que l'organe d'amortissement asymétrique (5) comporte une portion centrale (5c) reliant la première et la deuxième portion (5a, 5b),
et en ce que l'organe d'amortissement asymétrique (5 ; 15) est réalisé en une seule pièce.

2. Dispositif de retour haptique selon la revendication précédente, **caractérisé en ce qu'**il comporte au moins un organe de fixation (11) pour fixer la partie mobile (2) à la partie fixe (3) à travers l'organe d'amortissement asymétrique (5 ; 15), l'organe d'amortissement asymétrique (5 ; 15) comportant une première portion (5a) interposée entre la partie mobile (2) et la partie fixe (3) et une deuxième portion (5b) interposée entre la partie fixe (3) et la tête de l'organe de fixation (11a).

3. Dispositif de retour haptique selon l'une des revendications 1 à 2, **caractérisé en ce que** la première portion de l'organe d'amortissement asymétrique (5a) comporte une forme géométrique conférant une raideur plus importante que celle de la forme géométrique de la deuxième portion de l'organe d'amortissement asymétrique (5b).

4. Dispositif de retour haptique selon l'une des revendications 1 à 3, **caractérisé en ce que** la première portion de l'organe d'amortissement asymétrique (5a) présente une épaisseur plus grande dans la direction de la vibration (Z) que l'épaisseur de la deuxième portion de l'organe d'amortissement asymétrique (5b).

5. Dispositif de retour haptique selon l'une des revendications 1 à 4, **caractérisé en ce que** la première portion de l'organe d'amortissement asymétrique (5a) comporte un matériau présentant une raideur plus importante que la raideur du matériau de la deuxième portion de l'organe d'amortissement asymétrique (5b).

6. Dispositif de retour haptique selon l'une des revendications 1 à 5, **caractérisé en ce que** la première et/ou la deuxième portion de l'organe d'amortissement asymétrique (5a, 5b) présente la forme d'une rondelle.

7. Dispositif de retour haptique selon l'une des revendications précédentes, **caractérisé en ce que** l'actionneur vibratoire (7) est configuré pour faire vibrer la surface tactile (6) dans une direction de vibration (Z) perpendiculaire au plan de la surface tactile (6).

## Patentansprüche

1. Haptische Rückkopplungsvorrichtung (1) für ein Kraftfahrzeug, welche aufweist:
- einen beweglichen Teil (2), der eine berührungsempfindliche Fläche (6) und mindestens einen Vibrationsaktuator (7), um die berührungsempfindliche Fläche (6) vibrieren zu lassen, umfasst,
- einen Träger (8), der die berührungsempfindliche Fläche (6) trägt und an dem der Vibrationsaktuator (7) befestigt ist,
- einen ortsfesten Teil (3), der dazu bestimmt ist, am Kraftfahrzeug befestigt zu werden,
- mindestens ein asymmetrisches Dämpfungsorgan (5; 15), das wenigstens teilweise zwischen dem beweglichen Teil (2) und dem ortsfesten Teil (3) angeordnet ist, wobei das asymmetrische Dämpfungsorgan (5; 15) dafür ausgelegt ist, die von dem Vibrationsaktuator (7) erzeugte Vibration in einer Richtung stärker zu dämpfen als in der entgegengesetzten Richtung,
und derart ausgebildet ist, dass sie ein asymmetrisches Dämpfungsorgan (5) aufweist, das einen ersten Abschnitt (5a) aufweist, der dafür ausgelegt ist, die von dem Vibrationsaktuator (7) erzeugte Vibration in einer Richtung zu dämpfen, und einen zweiten Abschnitt (5b), der dafür ausgelegt ist, die Vibration mindestens in der entgegengesetzten Richtung zu dämpfen,
wobei der erste Abschnitt des asymmetrischen Dämpfungsorgans (5a) steifer als der zweite Abschnitt des asymmetrischen Dämpfungsorgans (5b) ist,
wobei das asymmetrische Dämpfungsorgan (15) zwischen dem beweglichen Teil (2) und dem ortsfesten Teil (3) angeordnet ist und an dem beweglichen Teil (2) und an dem ortsfesten Teil (3) befestigt ist, wobei das asymmetrische Dämpfungsorgan (15) Dämpfungseigenschaften aufweist, die bei Druck und Zug verschieden sind,
wobei das asymmetrische Dämpfungsorgan (15) bei Druck stärker dämpft als bei Zug,
derart, dass das asymmetrische Dämpfungsorgan (5) einen zentralen Abschnitt (5c) aufweist, der den ersten und den zweiten Abschnitt (5a, 5b) verbindet,
und derart, dass das asymmetrische Dämpfungsorgan (5; 15) aus einem Stück hergestellt ist.

2. Haptische Rückkopplungsvorrichtung nach dem vorhergehenden Anspruch, **dadurch gekennzeichnet, dass** sie mindestens ein Befestigungsorgan (11) zum Befestigen des beweglichen Teils (2) durch das asymmetrische Dämpfungsorgan (5; 15) hindurch an dem ortsfesten Teil (3) aufweist, wobei das asymmetrische Dämpfungsorgan (5; 15) einen ersten Abschnitt (5a), der zwischen dem beweglichen Teil (2) und dem ortsfesten Teil (3) angeordnet ist, und einen zweiten Abschnitt (5b), der zwischen dem ortsfesten Teil (3) und dem Kopf des Befestigungsorgans (11a) angeordnet ist, aufweist.

3. Haptische Rückkopplungsvorrichtung nach einem der Ansprüche 1 bis 2, **dadurch gekennzeichnet, dass** der erste Abschnitt des asymmetrischen Dämpfungsorgans (5a) eine geometrische Form aufweist, die eine Steifigkeit verleiht, die größer als diejenige der geometrischen Form des zweiten Abschnitts des asymmetrischen Dämpfungsorgans (5b) ist.

4. Haptische Rückkopplungsvorrichtung nach einem der Ansprüche 1 bis 3, **dadurch gekennzeichnet, dass** der erste Abschnitt des asymmetrischen Dämpfungsorgans (5a) eine Dicke in der Richtung der Vibration (Z) aufweist, die größer als die Dicke des zweiten Abschnitts des asymmetrischen Dämpfungsorgans (5b) ist.

5. Haptische Rückkopplungsvorrichtung nach einem der Ansprüche 1 bis 4, **dadurch gekennzeichnet, dass** der erste Abschnitt des asymmetrischen Dämpfungsorgans (5a) ein Material aufweist, das eine Steifigkeit aufweist, die größer als die Steifigkeit des Materials des zweiten Abschnitts des asymmetrischen Dämpfungsorgans (5b) ist.

6. Haptische Rückkopplungsvorrichtung nach einem der Ansprüche 1 bis 5, **dadurch gekennzeichnet, dass** der erste und/oder der zweite Abschnitt des asymmetrischen Dämpfungsorgans (5a, 5b) die Form einer runden Scheibe aufweisen.

7. Haptische Rückkopplungsvorrichtung nach einem der vorhergehenden Ansprüche, **dadurch gekennzeichnet, dass** der Vibrationsaktuator (7) dafür ausgelegt ist, die berührungsempfindliche Fläche (6) in einer Vibrationsrichtung (Z) vibrieren zu lassen, die zur Ebene der berührungsempfindlichen Fläche (6) senkrecht ist.

## Claims

1. Haptic feedback device (1) for a motor vehicle, having:
- a mobile part (2) comprising a touch-sensitive surface (6) and at least one vibratory actuator (7) for vibrating the touch-sensitive surface (6),
- a support (8) bearing the touch-sensitive surface (6) and to which the vibratory actuator (7) is fastened,
- a fixed part (3) intended to be fastened to the motor vehicle,
- at least one asymmetrical damping member (5; 15) at least partially interposed between the mobile part (2) and the fixed part (3), the asymmetrical damping member (5; 15) being configured to damp the vibration generated by the vibratory actuator (7) more in one direction than in the opposite direction,
arranged in that it has an asymmetrical damping member (5) having a first portion (5a) configured to damp the vibration generated by the vibratory actuator (7) in one direction and a second portion (5b) configured to damp the vibration at least in the opposite direction,
the first portion of the asymmetrical damping member (5a) being stiffer than the second portion of the asymmetrical damping member (5b)
the asymmetrical damping member (15) being interposed between the mobile part (2) and the fixed part (3) and fastened to the mobile part (2) and to the fixed part (3), the asymmetrical damping member (15) exhibiting damping properties that are different in compression to in tension,
the asymmetrical damping member (15) damping more in compression than in tension,
in that the asymmetrical damping member (5) has a central portion (5c) linking the first and the second portion (5a, 5b),
and in that the asymmetrical damping member (5; 15) is produced in a single piece.

2. Haptic feedback device according to the preceding claim, **characterized in that** it has at least one fastening member (11) for fastening the mobile part (2) to the fixed part (3) through the asymmetrical damping member (5; 15), the asymmetrical damping member (5; 15) having a first portion (5a) interposed between the mobile part (2) and the fixed part (3) and a second portion (5b) interposed between the fixed part (3) and the head of the fastening member (11a).

3. Haptic feedback device according to either of Claims 1 and 2, **characterized in that** the first portion of the asymmetrical damping member (5a) has a geometric shape conferring a stiffness greater than that of the geometric shape of the second portion of the asymmetrical damping member (5b).

4. Haptic feedback device according to one of Claims 1 to 3, **characterized in that** the first portion of the asymmetrical damping member (5a) has a greater thickness in the direction of the vibration (Z) than the thickness of the second portion of the asymmetrical damping member (5b) .

5. Haptic feedback device according to one of Claims 1 to 4, **characterized in that** the first portion of the asymmetrical damping member (5a) has a material exhibiting a stiffness greater than the stiffness of the material of the second portion of the asymmetrical damping member (5b).

6. Haptic feedback device according to one of Claims 1 to 5, **characterized in that** the first and/or the second portion of the asymmetrical damping member (5a, 5b) has the form of a washer.

7. Haptic feedback device according to one of the preceding claims, **characterized in that** the vibratory actuator (7) is configured to vibrate the touch-sensitive surface (6) in a direction of vibration (Z) perpendicular to the plane of the touch-sensitive surface (6).
